# FASCICULE DE BREVET EUROPEEN

(11) **EP 0 952 090 B1**
(45) Date de publication et mention de la délivrance du brevet: **30.06.2004**
(21) Numéro de dépôt: 99400719.3
(22) Date de dépôt: 24.03.1999
(51) Int. Cl.: B65D 47/20, G01F 11/16

(54) **Embout doseur**
Dosieraufsatz
Dosing tip

(30) Priorité: 21.04.1998 FR 9804973
(43) Date de publication de la demande: 27.10.1999
(73) Titulaire: L'OREAL, 75008 Paris (FR)
(72) Inventeur: Bonningue, Philippe, 75020 Paris (FR); Bougamont, Jean-Louis, 76260 Eu (FR)
(74) Mandataire: Tanty, François

(56) Documents cités:
- WO-A-92/10727
- FR-A- 674 613
- FR-A- 2 203 752
- US-A- 2 904 227
- US-A- 5 090 600

## Description

La présente invention a trait à un embout doseur selon le préambule de la revendication 1 pour la distribution sous forme de doses de volume prédéterminé, d'un produit fluide, notamment un produit cosmétique tel qu'un shampooing, un après shampooing, un gel, une lotion, un lait, etc. L'invention concerne également un ensemble de conditionnement et de distribution équipé d'un embout doseur selon la présente invention.

Dans le domaine de la cosmétique en particulier, bon nombre de produits capillaires, en particulier les shampooings, sont conditionnés dans des récipients à parois déformables dont le col est obturé par une paroi percé en son centre d'un ou plusieurs petits orifices pour la sortie du produit. Pour distribuer le produit, le récipient est retourné tête en bas. Une pression exercée sur les parois déformables du récipient permet de forcer le produit au travers du ou des orifices. Le produit est récupéré dans le creux de la main de celui ou celle qui l'utilise, et appliqué sur la chevelure. Ce geste simple ne permet pas toutefois, de doser la quantité de produit distribué.

Certes, il existe des dispositifs pour le dosage d'un produit à distribuer, mais, qui sont d'une complexité telle, que leur coût est totalement inadapté avec les impératifs économiques de certains circuits de distribution, en particulier la grande distribution.

Le brevet US-A-5 090 600 décrit un embout doseur du type comportant une chambre doseuse formée à l'intérieur d'un piston dont une extrémité libre est pourvue d'ouvertures aptes à permettre la sortie dosée du produit. Le dégagement des ouvertures de la chambre doseuse est obtenu au moyen d'une pression exercée par le produit sur une face du piston. Le produit s'écoule ensuite par gravité en position dégagée des ouvertures. Un tel embout est particulièrement approprié pour la distribution dosée de produits très liquides tels que des boissons. En revanche, un tel système peut difficilement être utilisé pour la distribution de produits visqueux, tels que couramment utilisés notamment dans le domaine de la cosmétique. En effet, la viscosité de ces produits, n'autorise pas un écoulement suffisamment rapide de la dose de produit, sous le seul effet de son poids. En outre, les ouvertures sont formées d'orifices percés dans la paroi de la chambre doseuse, et donc orientés radialement par rapport à la section de ladite chambre doseuse. Ainsi, en sortie, le produit sort avec une composante essentiellement radiale, qui peut être acceptable lorsque le produit s'écoule uniquement sous l'effet de son poids. En revanche, une telle sortie radiale est totalement inacceptable lorsque le produit sort sous pression, dans la mesure où il devient très difficile de récupérer le produit distribué de manière localisée.

Le brevet US-A-2 904 227 décrit un embout pour la distribution dosée d'un produit, tel que défini dans le préambule de la revendication 1, comprenant une chambre de dosage à l'intérieur de laquelle est monté coulissant un piston. Le piston est traversé par un canal axial se terminant au voisinage de l'extrémité libre du piston par une portion radiale débouchant sur un orifice de sortie. En position de repos, l'orifice de sortie est obturé. Pour distribuer une dose de produit, l'orifice de sortie est dégagé sous la pression du produit s'exerçant sur le piston. Le produit circule au travers d'une portion radiale du canal, passe dans la partie axiale du canal, et sort au travers de l'orifice de sortie radial. De la même manière que pour le dispositif du document précédent, le produit sort avec une très forte composante radiale, qui ne permet pas la distribution localisée du produit. En particulier, dans le cas d'un produit cosmétique, il est difficile de récupérer le produit distribué au creux de la main. En outre, le passage obligé du produit au travers de ce canal axial ménagé à l'intérieur du piston, rend le dispositif tout particulièrement inadapté pour des forts débits, en particulier pour des produits à forte viscosité. De plus, un tel canal axial, est sujet à encrassement; en particulier après une longue période d'inutilisation, pouvant rendre le dispositif totalement inutilisable.

La demande de brevet WO 92/10727 décrit un embout doseur comportant une chambre doseuse à volume fixe, pouvant être déplacée depuis une position de remplissage à une position de distribution, dans laquelle un ou plusieurs orifices de sortie sont dégagés de manière à permettre l'écoulement du produit par gravité. Un tel système n'est pas adapté à la distribution de produits à forte viscosité.

Le brevet FR 674 613 décrit une tête de distribution ne permettant pas de doser la quantité de produit distribué.

Aussi, est-ce un des objets de l'invention que de fournir un embout doseur résolvant en tout ou partie, les problèmes discutés en référence aux dispositifs de la technique antérieure.

C'est en particulier un objet de l'invention que de fournir un embout doseur, facilement utilisable, et à faible coût de revient.

C'est un autre objet de l'invention que de fournir un embout, doseur, particulièrement adapté à la distribution dosée de produits à forte viscosité.

C'est un autre objet de l'invention que de fournir un embout doseur, permettant la distribution dosée et localisée d'un produit sous pression.

Selon l'invention, ces objets sont atteints en réalisant un embout doseur tel que défini dans la revendication 1.

Avec une telle structure, dans laquelle le produit sort par un ou plusieurs passages formés à l'extérieur de l'organe de fermeture, c'est à dire entre l'organe de fermeture et le bord intérieur d'un orifice dans lequel se déplace l'organe de fermeture, il est possible de faire sortir le produit, selon au moins un flux à composante essentiellement axiale, c'est à dire de façon très localisée, et donc facilement récupérable, notamment au creux de la main.

A l'inverse de certains dispositifs de la technique antérieure, utilisant une chambre doseuse à volume fixe, le dispositif selon l'invention utilise une chambre à volume variable, en réponse au mouvement du piston à l'intérieur de la chambre, sous la pression du produit. Ainsi, le produit contenu dans la chambre doseuse est chassé par le piston, sous la pression du produit, ce qui autorise la distribution de produits à forte viscosité.

Le piston, solidaire de l'organe de fermeture, peut être couplé à ce dernier de différentes manières. Il peut s'agir d'une liaison fixe (dans le cas d'un piston formant une seule pièce avec l'organe de fermeture, ou monté fixement sur l'organe de fermeture). Dans ce cas, le piston se déplace de la même manière que l'organe de fermeture, c'est à dire avec un mouvement selon la même amplitude. Alternativement, il peut s'agir d'une liaison coulissante qui, notamment en combinaison avec des butées appropriées, permet au piston de se déplacer de manière solidaire de l'organe de fermeture sur une partie de sa course, puis indépendamment de l'organe de fermeture sur le reste de sa course. On permet ainsi de limiter la course de l'organe de fermeture, et notamment de la partie émergeante de ce dernier, tout en conservant la possibilité de distribuer des doses importantes de produit. En outre, en disposant le ou les passages de sortie entre l'organe de fermeture et l'ouverture de la paroi de la chambre doseuse, il est possible dans une large mesure, en modifiant le nombre de passages et leur taille, de jouer sur les débits de sortie du produit. Dans le cas d'un organe de fermeture cylindrique de révolution, on peut définir un ou plusieurs passages d'écoulement du produit pouvant s'étendre sur un angle pouvant varier de 1° à 360°. Cette flexibilité autorise la distribution de produits ayant une viscosité choisie dans la gamme allant des produits très liquides aux produits très visqueux, tels que les shampooings ou les gels. De plus, ainsi que mentionné ci-avant, avec une pression exercée dans des conditions normales d'utilisation, la sortie du produit se fait essentiellement selon un axe, en l'occurrence, l'axe de la chambre de dosage. Cette sortie essentiellement axiale du produit, permet de le récupérer facilement, notamment au creux de la main, dans le cas d'un shampooing. Le coût de revient est compatible avec les impératifs économiques de la grande distribution dans la mesure où un tel embout met en oeuvre un nombre de pièces limité dont la réalisation, notamment par moulage, n'implique pas l'utilisation de moules compliqués et coûteux. Typiquement, pour un shampooing, le volume de la chambre de dosage est de l'ordre de 5 ml.

Avantageusement, ledit organe de fermeture obture sensiblement ladite ouverture lorsque le piston est dans la seconde position. Ainsi, l'interruption de la sortie du produit se fait de manière "abrupte", ce qui permet notamment de toujours distribuer la même dose de produit.

Des moyens de rappel élastiques peuvent être prévus pour, lorsque cesse la pression du produit sur ladite première surface du piston, rappeler le piston dans ladite première position. Avantageusement, de tels moyens de rappel élastiques sont constitués d'un ressort hélicoïdal disposé tout autour de l'organe de fermeture, et dont une première extrémité est en butée contre la seconde surface du piston, et dont la seconde extrémité est en butée contre une surface de ladite paroi située en regard de ladite seconde surface.

Avantageusement, la seconde extrémité du ressort est en butée sur une portion discontinue de ladite surface de la paroi transversale, formant au moins une portion en creux, de manière à permettre la circulation du produit depuis la chambre doseuse vers les passages de sortie, sous le ressort, lorsque le ressort est entièrement comprimé. On améliore ainsi la vidange de la chambre doseuse.

Le profil du piston peut être tel, que lorsque celui-ci est dans la seconde position, une zone annulaire du piston soit sensiblement en contact avec ladite surface de la paroi, tout autour dudit ressort. Ainsi, lorsque le piston est dans la seconde position, on réduit le volume "résiduel" situé entre le piston et la paroi dans laquelle est ménagée ladite ouverture, lequel volume résiduel est lié à la présence du ressort comprimé tout autour de l'organe de fermeture.

Alternativement, il est possible de prévoir que le retour du piston se fasse manuellement par une pression exercée sur l'extrémité libre de l'organe de fermeture, ou lors de la mise en place d'un capuchon amovible sur l'embout doseur. Lors du retour du piston dans la première position, la surface extérieure de l'organe de fermeture est raclée par le bord de la paroi délimitant ladite ouverture. Dans le cas d'un produit fortement visqueux, le produit ainsi raclé peut être ensuite prélevé avec la main sur la surface correspondante de l'embout doseur.

De préférence, le récipient est à parois latérales déformables, la pression du produit sur la première surface du piston étant obtenue par une pression exercée sur lesdites parois, des moyens permettant une entrée d'air dans le récipient lorsque cesse la pression sur les parois, de manière à compenser la diminution de volume de produit à l'intérieur du récipient, suite à la distribution d'une dose de produit. Ainsi, cette configuration offre l'avantage d'autoriser une gestuelle similaire à la gestuelle utilisée conventionnellement, en particulier dans le domaine de la cosmétique, et telle que discutée dans la première partie de la description.

De préférence ladite entrée d'air s'effectue, lors du retour du piston dans la première position, par le (ou les) passage(s) entre ledit organe de fermeture et le bord de la paroi délimitant ladite ouverture. On facilite ainsi la réalisation de l'ensemble, en s'affranchissant de la présence d'un circuit séparé pour la reprise d'air.

Selon un mode de réalisation préférentiel, ledit orifice d'entrée s'étend sur une hauteur axiale telle, que sur une première partie de la course du piston entre lesdites première et seconde positions, le (ou les) orifice(s) d'entrée soient ouverts, de manière à permettre l'entrée de produit sous pression dans la chambre doseuse, afin de permettre un remplissage sensiblement complet de ladite chambre doseuse, ledit organe de fermeture étant conçu de manière à ce que l'ouverture de la chambre doseuse soit obturée lorsque le piston se déplace sur ladite première partie de sa course. Cela permet, dans le cas d'un produit visqueux, de toujours pouvoir remplir sensiblement la totalité de la chambre de dosage, tout particulièrement dans l'hypothèse d'une distribution d'un produit visqueux, intervenant peu de temps après une distribution précédente. En effet dans le cas d'un produit fortement visqueux, le produit s'écoulant par gravité, pourrait ne pas avoir suffisamment de temps pour remplir toute la chambre de dosage. Avec cette caractéristique avantageuse de l'invention, le remplissage par gravité de la chambre de dosage est complété par un remplissage sous pression, intervenant, le cas échéant, au tout début d'une phase de distribution . De manière plus précise, on utilise une pluralité de tels orifices d'entrée disposés de manière régulière tout autour de la périphérie de la chambre de dosage.

Dans cette dernière configuration, ledit organe de fermeture peut comprendre une première portion adjacente au piston et une seconde portion opposée à la première, la seconde portion de l'organe de fermeture étant de hauteur sensiblement égale à la hauteur axiale du (ou des) orifice(s) d'entrée et de section cylindrique apte à obturer ladite ouverture sur ladite première partie de la course du piston. Ainsi, le dégagement du ou des passages de sortie du produit intervient sensiblement simultanément à la fermeture du ou des orifices d'entrée.

Avantageusement, le (ou les) passage(s) entre ledit organe de fermeture et le bord de la paroi délimitant ladite ouverture, sont formés d'une ou plusieurs zones axiales de l'organe de fermeture, disposés dans une portion intermédiaire située entre la première et la seconde portion, lesdites zones étant de plus faible section que la section de ladite ouverture. A titre d'exemple, il peut s'agir de gorges orientées axialement et ménagées sur la paroi extérieure de l'organe de fermeture, en différents endroits espacés régulièrement de la périphérie de l'organe de fermeture. Le nombre et la profondeur de telles gorges dépend dans une large mesure de la viscosité du produit, et du débit souhaité.

Typiquement, le (ou les) passage(s) ont une largeur radiale comprise entre 0,01 mm et 8 mm, et de préférence, entre 0,2 mm et 2 mm.

Selon un autre mode de réalisation, la portion intermédiaire est de section plus faible que la section de l'ouverture, et alignée sur l'axe de ladite ouverture de manière à permettre le passage du produit tout autour de l'organe de fermeture, ladite portion intermédiaire étant reliée à la seconde portion par une zone tronconique. Une telle géométrie permet d'avoir un flux uniforme de produit tout autour de l'organe de fermeture, à la manière d'un tube, dont la composante axiale est encore améliorée, la partie tronconique formant une rampe pour le produit, de manière à guider son écoulement de manière sensiblement axiale.

Selon un mode de réalisation préférentiel, la chambre doseuse est disposée de façon annulaire tout autour de l'organe de fermeture, ledit organe de fermeture étant centré sur l'axe X de la chambre doseuse. Avantageusement, ladite chambre, ainsi que l'organe de fermeture sont de section circulaire. Bien que la section circulaire soit préférée, toute autre section pourrait toutefois être utilisée, en particulier pour l'organe de fermeture qui pourrait être de section carrée, triangulaire, hexagonale, ovale, en étoile, ou autre. De même, il est possible de prévoir que l'organe de fermeture ne soit pas centré sur l'axe de la chambre de dosage. Le "design" de l'embout doseur est choisi en fonction de l'esthétique recherchée. Il est possible notamment de concevoir la chambre de dosage de sorte que, en position émergeante de l'organe de fermeture, celui-ci ne présente sensiblement aucune portion émergeant par rapport à une zone d'extrémité de la chambre doseuse, formée notamment de façon annulaire par rapport audit organe de fermeture.

L'embout doseur selon l'invention peut comprendre des moyens aptes à permettre, notamment par claquage ou vissage, sa fixation sur un col formé par ledit récipient. A titre préférentiel, l'embout doseur selon l'invention est obtenu de moulage de matériau thermoplastique, choisi notamment parmi les polypropylènes ou les polyéthylènes.

Selon un autre aspect de l'invention, on réalise également un ensemble pour le conditionnement et la distribution dosée d'un produit, notamment cosmétique comprenant un récipient formé d'un corps dont une extrémité est fermée par un fond, l'autre extrémité formant un col dont un bord libre délimite une ouverture, un embout doseur selon l'invention étant monté fixement sur ledit col. Le récipient peut se présenter sous forme d'un tube, ou d'un flacon. Sa section peut être quelconque, en particulier ovale, elliptique ou circulaire. Un capuchon peut être prévu pour, notamment en position de stockage, recouvrir de manière amovible ledit embout doseur. Avantageusement, l'embout doseur est monté dans l'axe du récipient. Toutefois, il ne s'agit pas là d'une caractéristique nécessaire. Dans certains cas il peut être souhaitable de monter l'embout doseur avec un angle par rapport à l'axe du récipient, afin d'améliorer le taux de vidange du récipient.

Avantageusement, le corps présente des parois latérales aptes à se déformer lorsqu'une pression est exercée dessus, et à revenir à leur forme initiale lorsque cesse la pression. Typiquement, la pression est exercée de manière perpendiculaire aux parois latérales.

Un tel ensemble est particulièrement adapté pour le conditionnement et la distribution dosée d'un produit cosmétique, notamment un shampooing, un après-shampooing, un gel de coiffage, un lait, ou une crème de soin.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A-1B représentent un mode de réalisation d'un récipient, sous forme d'un flacon, équipé d'un embout doseur selon l'invention. A la figure 1A, l'embout est en position de repos. A la figure 1B, l'embout est en position de distribution d'une dose;
- la figure 2 représente une vue en coupe axiale d'un mode de réalisation de l'embout doseur selon l'invention;
- les figures 3A-3C représentent des vues en coupe illustrant diverses configurations des passages de sortie du produit;
- les figures 4A-4D illustrent les différentes étapes du fonctionnement de l'embout distributeur de la figure 2; et
- la figure 5 représente une variante du mode de réalisation de la figure 2.

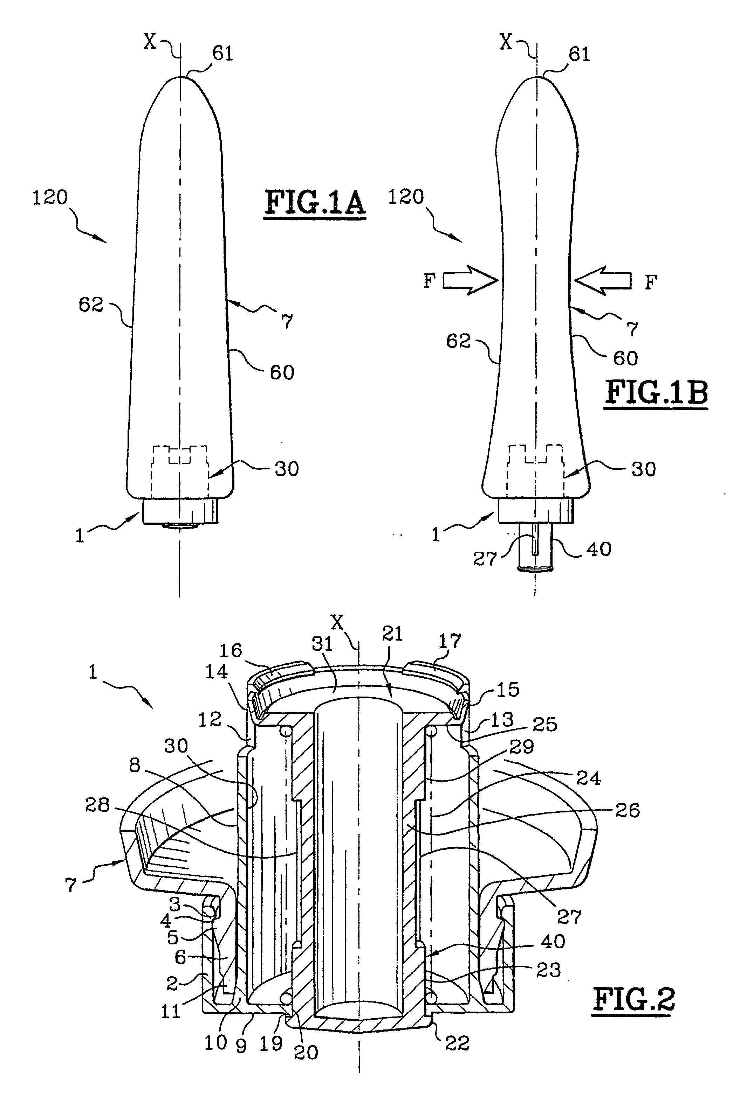

L'embout 1 représenté à la figure 2 (représenté en position tête en bas du récipient) comprend une paroi transversale 9 portant sur sa périphérie, une jupe d'accrochage circulaire 2 dont un bord libre 3 comprend sur sa surface intérieure, un bourrelet de claquage 4, apte à coopérer avec un bourrelet de claquage correspondant 5 prévu à la base du col 6 d'un récipient 7, notamment un flacon à parois déformables.

L'embout comporte une seconde jupe 8, d'axe X, et concentrique avec la jupe d'accrochage. La jupe 8 est de diamètre extérieur plus faible que le diamètre intérieur de la jupe d'accrochage 2. La différence de diamètre correspond sensiblement à l'épaisseur du col 6. A la jonction entre la jupe 8 et la paroi transversale 9, du côté de la jupe d'accrochage 2, la jupe présente une partie légèrement tronconique 10, de manière à, en position montée de l'embout doseur sur le col, obturer de manière étanche l'ouverture délimitée par le bord libre 11 du col 6. La jupe 8 forme la paroi extérieure de la chambre de dosage 30 de l'embout doseur 1. A son extrémité libre, opposée à la paroi transversale 9, la jupe 8 présente une pluralité d'échancrures qui, comme on le verra plus en détail par la suite forment une pluralité d'orifices d'entrée 12, 13 du produit, en l'occurrence quatre, disposés de manière régulière sur toute la circonférence de la jupe 8 et séparés par des pattes d'accrochage et de guidage 14, 15 présentant une certaine élasticité, radialement à la jupe 8, et dont l'extrémité libre se termine par un bourrelet 16, 17, tourné vers l'intérieur de la jupe. Les bourrelets 16, 17 sont destinés comme on le verra plus en détail par la suite au maintien d'un piston 21 à l'intérieur de la chambre de dosage 30.

La paroi transversale 9 présente un bord replié vers l'extérieur 19, et délimitant une ouverture de section circulaire 20, centré sur l'axe X de la chambre de dosage 30. A l'intérieur de la jupe 8 est monté à coulisse un piston 21, se prolongeant en son centre, du côté de la paroi transversale 9, par une cheminée axiale formant un organe de fermeture 40. Une face 25 du piston 21 est en regard de la chambre doseuse, l'autre face 31 est en communication avec le récipient 7, via l'extrémité ouverte de la jupe 8. Le montage du piston 21 se fait en écartant élastiquement les pattes d'accrochage 14, 15, pour laisser passer le piston, lesdites pattes revenant par élasticité dans leur position initiale, une fois le piston en place à l'intérieur de la jupe 8. Selon le mode de réalisation illustré, la cheminée axiale est ouverte en son extrémité adjacente au piston 21. Il est toutefois possible de prévoir cette entrée soit obturée par une plaque montée sur le piston, de manière à éviter la création de tout volume mort à cet endroit. Alternativement, l'organe de fermeture est plein.

En l'absence de toute surpression à l'intérieur du récipient 7, le piston est sollicité en appui contre les bourrelets 16, 17 au moyen d'un ressort 24 dont une extrémité est en appui contre la face 25 du piston 21, située à l'intérieur de la chambre doseuse 30, et dont l'autre extrémité est en appui contre la surface interne de la paroi transversale 9. Dans la position haute du piston, ce dernier délimite avec les échancrures de la jupe une pluralité d'orifices d'entrée du produit 12, 13 dans la chambre doseuse 30. Les orifices d'entrée 12, 13 présentent une hauteur axiale maximale (c'est à dire en position de butée du piston) qui typiquement, est de l'ordre de quelques millimètres. A titre d'exemple, les échancrures ont une hauteur axiale qui est de l'ordre de 10 mm.

Ledit organe de fermeture comprend, à son extrémité opposée au piston 21, une portion 23 de diamètre légèrement inférieur au diamètre de l'ouverture 20, de manière à pouvoir coulisser de manière sensiblement étanche à l'intérieur de ladite ouverture 20. La hauteur de cette portion 23 est sensiblement égale à la hauteur axiale des orifices d'entrée 12, 13. La portion 23 forme en son extrémité libre, un épaulement 22 de diamètre externe légèrement supérieur au diamètre de l'ouverture 20, et destiné, en position haute du piston 21, à venir en butée à l'extérieur de la chambre doseuse 30 contre le bord replié 19 délimitant l'ouverture 20. L'organe de fermeture comprend également une portion intermédiaire 26 sur la surface extérieure de laquelle sont disposées de manière régulière, une pluralité de gorges 27, 28, (quatre gorges séparées de 90°, selon cet exemple) s'étendant sur une hauteur axiale sensiblement égale à la moitié de la hauteur axiale de l'organe de fermeture. Cette hauteur axiale des gorges définit la course de dosage du système. Ainsi, lorsque les gorges 27, 28 sont en regard de l'ouverture 20, elles délimitent avec le bord 19 de l'ouverture 20 une pluralité de passages pour la sortie du produit, selon une pluralité de flux à composante essentiellement axiale, en particulier lorsque la pression exercée sur les parois du récipient correspond à une pression telle que mise en oeuvre dans des conditions normales d'utilisation. La profondeur radiale des gorges est d'environ 1 mm. Entre la portion intermédiaire 26 et le piston 21, se trouve une portion 29 de diamètre externe sensiblement égal au diamètre extérieur de la portion 23, de manière à, en position basse du piston, venir obturer de manière sensiblement étanche, l'ouverture 20.

Tel que représenté aux figures 1A et 1B, l'ensemble 120 sur lequel est monté l'embout doseur 1 selon l'invention, est constitué d'un flacon 7, par exemple, en polyéthylène ou polypropylène. Le flacon 7 comporte un corps 62 fermé par un fond 61. Le corps est de section transversale allongée et est formé de parois 60 déformables "élastiquement" sous l'effet d'une pression exercée, de la manière illustrée à la figure 1 B, perpendiculairement aux grands côtés du flacon.

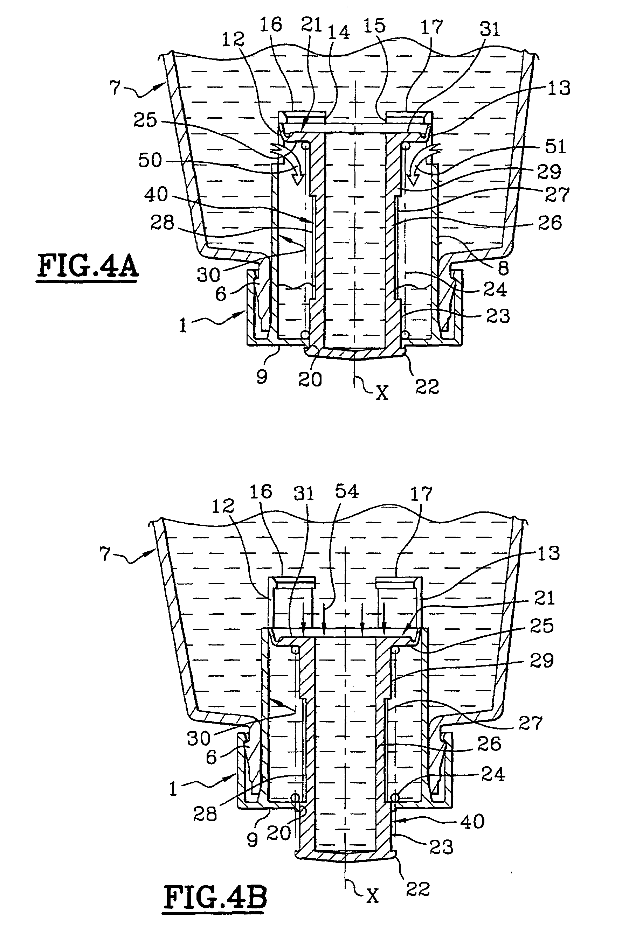

Les figures 1A-1B, et 4A-4D auxquelles il est maintenant fait référence, illustrent le fonctionnement de l'embout doseur décrit en référence à la figure 2. En position de repos (telle que décrite en référence à la figure 2), le récipient 7 est de préférence posé tête en bas sur une surface plane. Dans cette position, l'ouverture 20 est obturée par l'extrémité libre 22, 23 de l'organe de fermeture 40. Le piston 21, sollicité par le ressort 24 est en butée contre les bourrelets 16 et 17 des pattes d'accrochage 14 et 15. Les orifices d'entrée 12 et 13 sont dégagés de sorte que le produit peut s'écouler par gravité dans la chambre doseuse 30, tout autour de l'organe de fermeture 40, de manière à remplir ladite chambre doseuse 30. Cette position de repos est également représentée à la figure 1A.

A la figure 4A, une pression est exercée sur les parois latérales du récipient, en maintenant d'une main le récipient 7 tête en bas. Dans le cas où le produit n'a pas eu le temps de remplir par gravité la totalité de la chambre doseuse (par exemple entre deux utilisations très rapprochées dans le cas d'un produit très visqueux), le produit est forcé en premier lieu en direction des ouvertures 12 et 13 de la chambre doseuse jusqu'à remplissage complet de celle-ci. Les flux d'entrée du produit sont représentés par les flèches 50 et 51. Dans cette position "communiquante" des ouvertures 12, 13, se crée un équilibre entre les forces qui s'exercent d'une part sur la périphérie de la face 31 du piston, et d'autre part, sur la périphérie de la face 25 du piston, le piston ne progressant en direction de la paroi transversale 9 de la chambre doseuse, que sous l'effet de la pression s'exerçant sur la partie centrale de la face 31, située en regard de l'organe de fermeture 40. Pendant cette première partie du déplacement du piston 21, l'ouverture 20 est obturée de manière étanche par la portion 23 de l'organe de fermeture 40.

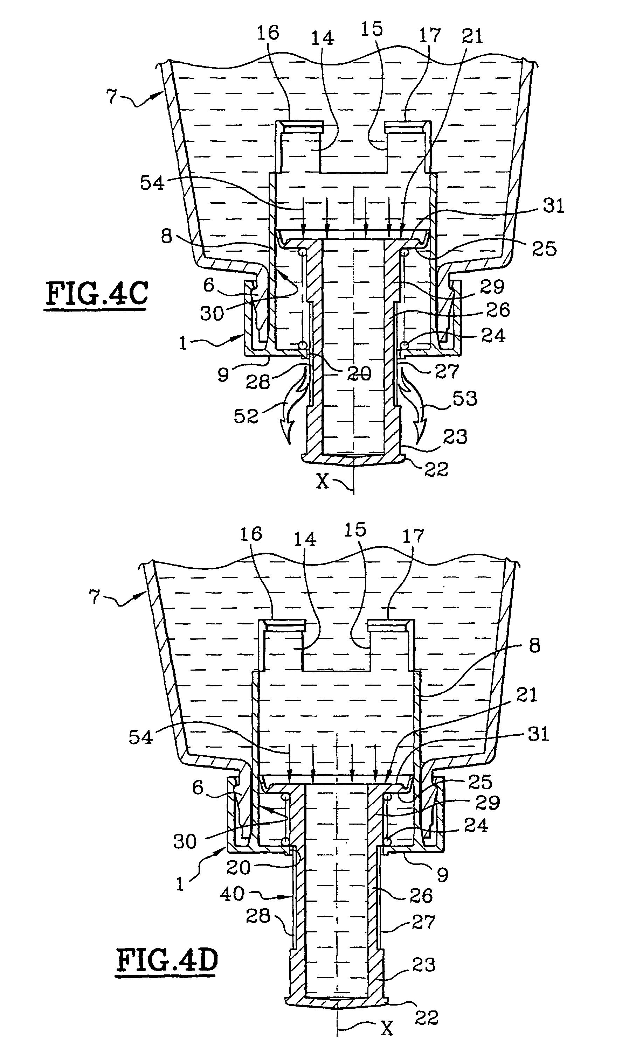

Après une course sensiblement égale à la hauteur axiale des ouvertures 12, 13, (figure 4B) le piston 21 interrompt la communication entre la chambre doseuse 8 et le récipient 7, les échancrures délimitant les ouvertures 12 et 13 se trouvant alors du côté du piston 21, opposé à la chambre doseuse 30. Sensiblement au même moment, la portion intermédiaire 26 de l'organe de fermeture 40 arrive en regard de l'ouverture 20, de manière à permettre la sortie du produit via les passages délimités par les gorges 27 et 28. Dans cette position "non communiquante" des ouvertures 12, 13, le produit appuie sur la totalité de la face 31 du piston (flèches 54). Ainsi que représenté sur la figure 4C par les flèches 52, 53, le produit s'écoule entre l'organe de fermeture et l'ouverture 20 selon des flux sensiblement axiaux, le long de la partie émergente de l'organe de fermeture 40. Le produit sort de manière localisée, sensiblement dans l'axe du récipient, et peut être récupéré au creux de la main de l'utilisateur.

En continuant de presser les parois du récipient 7, la descente du piston 21 en direction de l'ouverture 20 se poursuit jusqu'à ce que, les spires du ressort 24, complètement comprimées, forment butée. Dans cette position, illustrée à la figure 4D, l'organe de fermeture 40, émerge de façon sensible hors de l'embout doseur 1. La portion 29 de l'organe de fermeture 40 arrive en regard de l'ouverture 20, et obture cette dernière de façon sensiblement étanche, interrompant ainsi de manière précise la distribution du produit, après distribution d'un volume déterminé de produit. Cette position est également représentée à la figure 1B.

En relâchant la pression exercée sur les parois du flacon, ces dernières reviennent dans leur position initiale. Le piston, sous l'action de la force de rappel du ressort 24, revient en butée haute contre les bourrelets 16, 17 des pattes 14 et 15. Lors de ce retour en position haute, de l'air est aspiré à l'intérieur du récipient via les passages formés par les gorges 27 et 28 de la portion intermédiaire 26 de l'organe de fermeture 40, de manière à compenser la perte de volume à l'intérieur du récipient, occasionné par la distribution d'une dose de produit. Il est à noter que la reprise d'air se produit en premier lieu par aspiration via les gorges 27, 28 lors de la remontée du piston sous les forces de rappel élastique du ressort 24. L'air ainsi aspiré est ensuite acheminé dans le récipient 7 via les ouvertures 12, 13, lorsque la communication est rétablie entre la chambre doseuse 30 et le récipient 7.

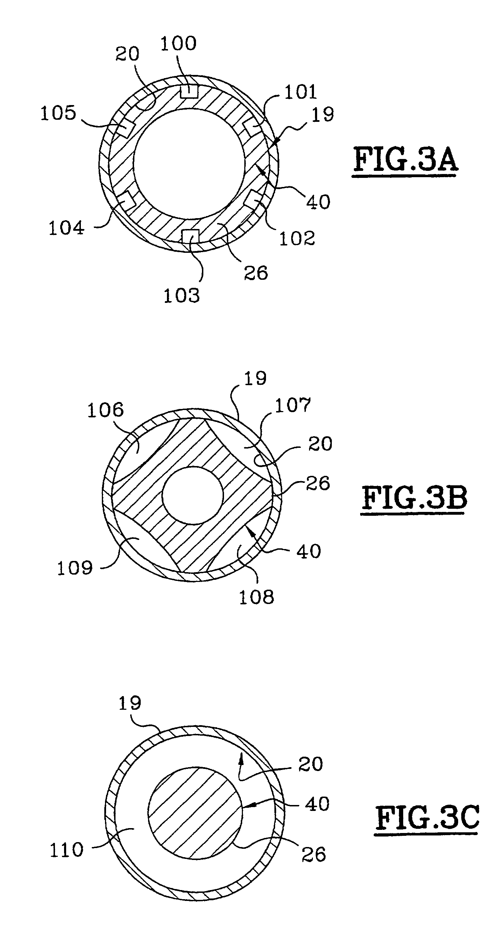

Les figures 3A-3C illustrent différentes sections des passages de sortie du produit, formées par la partie intermédiaire 26 de l'organe de fermeture 40, en regard du bord 19 délimitant l'ouverture 20. Le mode de réalisation de la figure 3A est similaire à celui décrit en référence à la figure 2, avec six gorges 100-105 ménagées à 60° sur la surface externe de la portion intermédiaire 26. Dans le mode de réalisation de la figure 3B, la partie intermédiaire est de section en étoile de manière à former entre les quatre branches de l'étoile quatre passages 106-109 pour le passage du produit entre l'organe de fermeture et le bord 19 délimitant l'ouverture 20. Dans le mode de réalisation de la figure 3C, l'organe de fermeture, à la différence des autres modes de réalisation, est formée d'un "cylindre" plein, la portion intermédiaire 26 étant de section circulaire, concentrique avec le bord 19 de l'ouverture 20. La section de la portion intermédiaire 26 est plus faible que la section de l'ouverture 20, de manière à former un passage annulaire 110 tout autour de l'organe de fermeture 40. Selon ce mode de réalisation, la portion intermédiaire de plus faible diamètre 26 peut se prolonger uniformément jusqu'au piston 21. Typiquement, la largeur radiale du passage annulaire est de l'ordre de quelques mm. Avantageusement, dans cette configuration, la portion intermédiaire 26 est reliée à la portion 23 par une zone tronconique (non représentée). Une telle zone favorise l'écoulement axial du produit. Dans cette dernière configuration, selon laquelle l'organe de fermeture est constitué d'un cylindre plein, il n'est pas nécessaire que la portion 23 de l'organe de fermeture soit de section uniforme. A cet effet, une zone cylindrique de plus faible section peut être formée entre l'extrémité la plus large de la partie tronconique, et une partie d'extrémité obstruant l'ouverture 20. Cette partie de plus faible section permet de réduire le poids de matière à cet endroit de l'organe de fermeture, de manière à autoriser l'obtention d'un état de surface encore plus satisfaisant, et donc une meilleure étanchéité à la fermeture. Le choix de telle ou telle configuration pour les passages de sortie du produit, dépend dans une large mesure de la viscosité du produit, et du débit souhaité. Il est clair que d'autres configurations peuvent être envisagées.

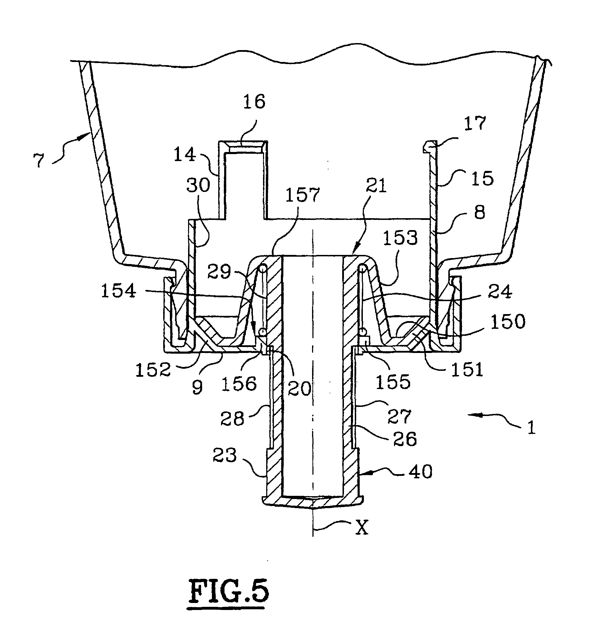

La figure 5 à laquelle il est maintenant fait référence illustre une variante du mode de réalisation de la figure 2. Selon cette variante, le piston 21 comprend une portion annulaire 150, tout autour de l'organe de fermeture 40, et qui en position basse, vient en appui sur la surface interne de la paroi 9 de la chambre doseuse 30. Le bord extérieur de la portion annulaire 150 est raccordé à la lèvre périphérique du piston par une première portion tronconique 151, s'évasant vers l'extérieur en direction du réservoir. La paroi 9 forme au voisinage de la zone de raccordement avec la paroi latérale 8, un profil correspondant 152 de sorte que, en position basse du piston 21, la partie tronconique 151 soit en appui sur ladite portion 152. Le bord intérieur de la portion annulaire 150 est relié à la partie centrale 157 du piston 21 par une seconde portion tronconique 153. La différence de hauteur axiale entre la partie annulaire 150 et la portion centrale 157 correspond sensiblement à la hauteur du ressort 24 en position comprimée. La portion tronconique 153 délimite avec la portion 29 de l'organe de fermeture 40, un logement annulaire apte à contenir le ressort lorsque celui-ci est en position comprimée telle que représentée à la figure 5. Avec un tel profil du piston 21, on réduit de manière substantielle le volume "résiduel" situé entre le piston 21 et la paroi 9 de la chambre doseuse, permettant ainsi de réduire l'encombrement de l'embout 1. En outre, selon cette variante, l'extrémité inférieure du ressort est montée sur une surface annulaire crénelée 154, formant succession de creux 155 et de bosses 156, lesdites portions en creux 155 permettant l'acheminement du produit vers les passages 27, 28 lorsque le ressort est complètement comprimé. On améliore ainsi le taux de vidange de la chambre doseuse 30.

## Revendications

1. Embout doseur (1) configuré pour être monté sur un récipient (7) contenant un produit, ledit embout comprenant une chambre doseuse (30) à l'intérieur de laquelle est monté à coulisse selon un axe (X) un piston (21) dont une première face (31) est en communication permanente sur l'ensemble de sa surface avec le récipient, et dont une seconde face (25), opposée à la première, est en communication avec la chambre doseuse (30), ledit piston (21) étant monté de manière à pouvoir, en réponse à une pression exercée par le produit sur la première face (31), passer d'une première position dans laquelle la chambre doseuse (30) a un volume maximum à une seconde position, ladite chambre doseuse (30) comprenant au moins un orifice d'entrée (12, 13) pour le produit, ouvert lorsque le piston (21) est dans la première position, et fermé lorsque le piston (21) est dans la seconde position, ledit piston (21) étant couplé à un organe de fermeture (40) qui, lorsque le piston passe de la première à la seconde position, émerge de façon sensible au travers d'une ouverture (20) ménagée dans une paroi (9) de la chambre doseuse située en regard du piston (21) et forme au moins un passage (27, 28, 100-110) pour permettre la sortie d'une dose de produit, ladite ouverture (20) étant obturée de manière étanche par ledit organe de fermeture (40) lorsque le piston (21) est dans la première position, embout **caractérisé par le fait que** la chambre doseuse (30) a un volume minimum lorsque le piston est dans la deuxième position, **par le fait que** le passage (27, 28, 100-110) est formé entre ledit organe de fermeture (40) et le bord (19) de la paroi délimitant ladite ouverture (20) et **par le fait que** ledit organe de fermeture (40) comporte une portion (29) obturant ladite ouverture (20) lorsque le piston (21) est dans la seconde position.

2. Embout doseur selon la revendication 1, **caractérisé en ce que** des moyens de rappel élastiques (24) sont prévus pour, lorsque cesse la pression du produit sur ladite première face (31) du piston, rappeler le piston (21) dans ladite première position.

3. Embout doseur selon la revendication 2, **caractérisé en ce que** les moyens de rappel élastiques (24) sont constitués d'un ressort hélicoïdal disposé autour de l'organe de fermeture, et dont une première extrémité est en butée contre la seconde face (25) du piston, et dont la seconde extrémité est en butée contre une surface de ladite paroi (9) située en regard de ladite seconde face (25).

4. Embout doseur selon la revendication 3, **caractérisé en ce que** la seconde extrémité du ressort (24) est en butée sur un élément (154) délimitant au moins une portion en creux (155) de manière à permettre le passage du produit sous le ressort (24) lorsque le piston (21) est dans ladite seconde position.

5. Embout doseur selon l'une quelconque des revendications 1 à 4, **caractérisé en ce que** le profil du piston (21) est tel que, lorsque celui-ci est dans la seconde position, une zone annulaire du piston (150, 151) est en contact avec la paroi (9) tout autour dudit ressort (24).

6. Embout doseur selon l'une quelconque des revendications précédentes, **caractérisé en ce que** le (ou les) orifice(s) d'entrée (12, 13) s'étendent sur une hauteur axiale telle, que sur une première partie de la course du piston (21) entre lesdites première et seconde positions, le (ou les) orifice(s) d'entrée (12, 13) soient ouverts, de manière à permettre l'entrée de produit sous pression dans la chambre doseuse (30), afin de permettre un remplissage complet de ladite chambre doseuse, ledit organe de fermeture (40) étant conçu de manière à ce que l'ouverture (20) de la chambre doseuse (30) soit obturée lorsque le piston (21) se déplace sur ladite première partie de sa course.

7. Embout doseur selon la revendication 6, **caractérisé en ce que** ledit organe de fermeture (40) comprend une première portion (29) adjacente au piston et une seconde portion (23) opposée à la première, la seconde portion (23) de l'organe de fermeture étant de hauteur égale à la hauteur axiale du (ou des) orifice(s) d'entrée (12, 13) et de section cylindrique apte à obturer ladite ouverture (20) sur ladite première partie de la course du piston (21).

8. Embout doseur selon la revendication 7, **caractérisé en ce que** le (ou les) passage(s) (27, 28, 100-110) entre ledit organe de fermeture (40) et le bord de la paroi délimitant ladite ouverture (20), sont formés d'une ou plusieurs zones axiales (27, Z8, 100-110) de l'organe de fermeture, disposées dans une portion intermédiaire (26) située entre la première (29) et la seconde portion (23), lesdites zones (27, 28, 100-110) étant de plus faible section que la section de ladite ouverture (20).

9. Embout doseur selon la revendication 8, **caractérisé en ce que** le (ou les) passage(s) (27, 28, 100-110) ont une profondeur radiale comprise entre 0,01 mm et 8 mm, et de préférence, entre 0,2 mm et 2 mm.

10. Embout doseur selon la revendication 8 ou 9, **caractérisé en ce que** la portion intermédiaire (26) est de section plus faible que la section de l'ouverture (20), et disposée dans l'axe de ladite ouverture (20) de manière à permettre le passage du produit tout autour de l'organe de fermeture (40), ladite portion intermédiaire (26) étant reliée à la seconde portion (23) par une zone tronconique.

11. Embout doseur selon l'une quelconque des revendications 1 à 10, **caractérisé en ce que** la chambre doseuse (30) est disposée de façon annulaire tout autour de l'organe de fermeture (40), ledit organe de fermeture (40) étant centré sur l'axe X de la chambre doseuse.

12. Embout doseur selon l'une quelconque des revendications précédentes **caractérisé en ce qu'**il comprend des moyens (4) aptes à permettre, notamment par claquage ou vissage, sa fixation sur un col (6) formé par ledit récipient (7).

13. Embout doseur selon l'une quelconque des revendications précédentes **caractérisé en ce qu'**il est obtenu de moulage de matériau thermoplastique, choisi notamment parmi les polypropylènes ou les polyéthylènes.

14. Embout doseur selon l'une quelconque des revendications précédentes, **caractérisé par le fait que** l'embout comporte une jupe (8) formant la paroi extérieure de la chambre doseuse (30), **par le fait que** la jupe (8) comporte à son extrémité libre des pattes d'accrochage (14,15) capables de s'écarter élastiquement pour laisser passer le piston lors de sa mise en place dans la jupe (8), les pattes d'accrochage présentant chacune une extrémité libre qui se termine par un bourrelet tourné vers l'intérieur de la jupe, destinée à maintenir le piston à l'intérieur de la chambre doseuse, et **par le fait que** la jupe comporte une pluralité d'échancrures à son extrémité libre opposée à la paroi transversale (9), qui forme une pluralité d'orifices d'entrée pour le produit, les échancrures étant disposées de manière régulière sur toute la circonférence de la jupe (8).

15. Embout doseur selon la revendication 14, **caractérisé par le fait que** la paroi transversale (9) est réalisée d'un seul tenant avec la jupe (8).

16. Ensemble pour le conditionnement et la distribution dosée d'un produit, notamment cosmétique comportant un récipient formé d'un corps (62) dont une extrémité est fermée par un fond (61), l'autre extrémité formant un col (6) dont un bord libre (11) délimite une ouverture, l'embout doseur (1) étant monté fixement sur ledit col et un embout doseur tel que défini dans l'une quelconque des revendications précédentes.

17. Ensemble selon la revendication 16, **caractérisé en ce que** le récipient (7) est à parois latérales (60) déformables, la pression du produit sur la première surface (31) du piston (21) étant obtenue par une pression exercée sur lesdites parois (60), l'ensemble comportant en outre des moyens (27, 28, 100-110) permettant une entrée d'air dans le récipient (7) lorsque cesse la pression sur les parois (60), de manière à compenser la diminution de volume de produit à l'intérieur du récipient (7), suite à la distribution d'une dose de produit.

18. Ensemble selon la revendication 16 ou 17, **caractérisé en ce que** ladite entrée d'air s'effectue, lors du retour du piston (21) dans la première position, par le (ou les) passage(s) (27, 28, 100-110) entre ledit organe de fermeture (40) et le bord (19) de la paroi (9) délimitant ladite ouverture (20).

19. Ensemble selon la revendication 18, **caractérisé en ce que** le corps (62) présente des parois (60) élastiquement déformables aptes à se déformer lorsqu'une pression est exercée dessus et à revenir à leur forme initiale lorsque cesse la pression.

20. Ensemble selon l'une quelconque des revendications 16 à 19, **caractérisé en ce qu'**il comporte un capuchon apte à recouvrir de manière amovible ledit embout doseur (1).

21. Utilisation d'un ensemble (120) selon l'une quelconque des revendications 16 à 20 pour le conditionnement et la distribution dosée d'un produit cosmétique, notamment un shampooing, un après-shampooing, un gel de coiffage, un lait ou une crème de soin.

## Patentansprüche

1. Dosieraufsatz (1), der ausgebildet ist, um auf einem ein Produkt enthaltenden Behälter (7) montiert zu werden, wobei dieser Aufsatz eine Dosierkammer (30) aufweist, in deren Innerem längs einer Achse (X) verschiebbar ein Kolben (21) montiert ist, von dem eine erste Seite (31) auf ihrer gesamten Oberfläche mit dem Behälter in ständiger Verbindung ist und von dem eine zweite Seite (25), die der ersten entgegengesetzt ist, mit der Dosierkammer (30) in Verbindung ist, wobei der Kolben (21) so montiert ist, daß er als Antwort auf einen von dem Produkt auf die erste Seite (31) ausgeübten Druck von einer ersten Stellung, in der die Dosierkammer (30) ein maximales Volumen hat, in eine zweite Stellung übergehen kann, wobei diese Dosierkammer (30) mindestens eine Eintrittsöffnung (12, 13) für das Produkt aufweist, die offen ist, wenn der Kolben (21) in der ersten Stellung ist, und geschlossen ist, wenn der Kolben (21) in der zweiten Stellung ist, wobei der Kolben (21) mit einem Verschlußorgan (40) gekoppelt ist, das, wenn der Kolben von der ersten in die zweite Stellung übergeht, durch eine Öffnung (20), die in einer dem Kolben (21) gegenüberliegenden Wand (9) der Dosierkammer vorgesehen ist, wesentlich auftaucht und mindestens einen Durchgang (27, 28, 100-110) bildet, um den Austritt einer Produktdosis zu gestatten, wobei die Öffnung (20) durch das Verschlußorgan (40) dicht verschlossen ist, wenn der Kolben (21) in der ersten Stellung ist, wobei der Aufsatz **dadurch gekennzeichnet ist, daß** die Dosierkammer (30) ein minimales Volumen hat, wenn der Kolben in der zweiten Stellung ist, daß der Durchgang (27, 28, 100-110) zwischen dem Verschlußorgan (40) und dem Rand (19) der die Öffnung (20) abgrenzenden Wand gebildet ist, und daß das Verschlußorgan (40) einen Abschnitt (29) aufweist, der die Öffnung (20) verschließt, wenn der Kolben (21) in der zweiten Stellung ist.

2. Dosieraufsatz nach Anspruch 1, **dadurch gekennzeichnet, daß** elastische Rückholmittel (24) vorgesehen sind, um, wenn der Druck des Produkts auf die erste Seite (31) des Kolbens nachläßt, den Kolben (21) in die erste Stellung zurückzuholen.

3. Dosieraufsatz nach Anspruch 2, **dadurch gekennzeichnet, daß** die elastischen Rückholmittel (24) aus einer Schraubenfeder bestehen, die um das Verschlußorgan herum angeordnet ist und von der ein erstes Ende an der zweiten Seite (25) des Kolbens in Anschlag ist und deren zweites Ende an einer der zweiten Seite (25) gegenüberliegenden Fläche der Wand (9) in Anschlag ist.

4. Dosieraufsatz nach Anspruch 3, **dadurch gekennzeichnet, daß** das zweite Ende der Feder (24) an einem Element (154) in Anschlag ist, das mindestens einen hohlen Abschnitt (155) begrenzt, so daß der Durchgang des Produkts unter der Feder (24) gestattet wird, wenn der Kolben (21) in der zweiten Stellung ist.

5. Dosieraufsatz nach einem der Ansprüche 1 bis 4, **dadurch gekennzeichnet, daß** das Profil des Kolbens (21) so beschaffen ist, daß, wenn dieser in der zweiten Stellung ist, eine ringförmige Zone des Kolbens (150, 151) mit der Wand (9) um die Feder (24) herum in Kontakt ist.

6. Dosieraufsatz nach einem der vorhergehenden Ansprüche, **dadurch gekennzeichnet, daß** die Eintrittsöffnung (oder die Eintrittsöffnungen) (12, 13) sich über eine solche axiale Höhe erstrecken, daß auf einem ersten Teil des Wegs des Kolbens (21) zwischen der ersten und der zweiten Stellung die Eintrittsöffnung (oder die Eintrittsöffnungen) (12, 13) offen sind, so daß der Eintritt des Produkts unter Druck in die Dosierkammer (30) gestattet wird, um eine vollständige Füllung der Dosierkammer zu gestatten, wobei das Verschlußorgan (40) so ausgebildet ist, daß die Öffnung (20) der Dosierkammer (30) geschlossen ist, wenn der Kolben (21) sich auf dem ersten Teil seines Wegs bewegt.

7. Dosieraufsatz nach Anspruch 6, **dadurch gekennzeichnet, daß** das Verschlußorgan (40) einen ersten dem Kolben benachbarten Abschnitt (29) und einen zweiten dem ersten entgegengesetzten Abschnitt (23) aufweist, wobei der zweite Abschnitt (23) des Verschlußorgans von einer Höhe ist, die gleich der axialen Höhe der Eintrittsöffnung (oder Eintrittsöffnungen) (12, 13) ist, und einen zylindrischen Querschnitt hat, der geeignet ist, die Öffnung (20) auf dem ersten Teil des Wegs des Kolbens (21) zu schließen.

8. Dosieraufsatz nach Anspruch 7, **dadurch gekennzeichnet, daß** der Durchgang (oder die Durchgänge) (27, 28, 100-110) zwischen dem Verschlußorgan (40) und dem Rand der die Öffnung (20) abgrenzenden Wand von einer oder mehreren axialen Zonen (27, 28, 100-110) des Verschlußorgans gebildet sind, die in einem Zwischenabschnitt (26) angeordnet sind, der zwischen dem ersten (29) und dem zweiten Abschnitt (23) gelegen ist, wobei der Querschnitt dieser Zonen (27, 28, 100-110) kleiner als der Querschnitt der Öffnung (20) ist.

9. Dosieraufsatz nach Anspruch 8, **dadurch gekennzeichnet, daß** der Durchgang (oder die Durchgänge) (27, 28, 100-110) eine radiale Tiefe zwischen 0,01 mm und 8 mm und vorzugsweise zwischen 0,2 mm und 2 mm aufweisen.

10. Dosieraufsatz nach Anspruch 8 oder 9, **dadurch gekennzeichnet, daß** der Zwischenabschnitt (26) einen kleineren Querschnitt als die Öffnung (20) hat und in der Achse dieser Öffnung (20) angeordnet ist, so daß der Durchgang des Produkts um das Verschlußorgan (40) herum gestattet wird, wobei der Zwischenabschnitt (26) mit dem zweiten Abschnitt (23) durch eine kegelstumpfförmige Zone verbunden ist.

11. Dosieraufsatz nach einem der Ansprüche 1 bis 10, **dadurch gekennzeichnet, daß** die Dosierkammer (30) ringförmig um das Verschlußorgan (40) herum angeordnet ist, wobei das Verschlußorgan (40) auf die Achse X der Dosierkammer zentriert ist.

12. Dosieraufsatz nach einem der vorhergehenden Ansprüche, **dadurch gekennzeichnet, daß** er Mittel (4) aufweist, die geeignet sind, seine Befestigung auf einem von dem Behälter (7) gebildeten Hals (6) insbesondere durch Einrasten oder Verschrauben zu gestatten.

13. Dosieraufsatz nach einem der vorhergehenden Ansprüche, **dadurch gekennzeichnet, daß** er durch Formgießen von Thermoplast hergestellt ist, der insbesondere aus den Polypropylenen oder Polyethylenen ausgewählt ist.

14. Dosieraufsatz nach einem der vorhergehenden Ansprüche, **dadurch gekennzeichnet, daß** der Aufsatz einen Mantel (8) aufweist, der die Außenwand der Dosierkammer (30) bildet, daß der Mantel (8) an seinem freien Ende Einhaklappen (14, 15) aufweist, die sich elastisch voneinander entfernen können, um den Kolben bei seinem Einsetzen in den Mantel (8) durchtreten zu lassen, wobei die Einhaklappen jeweils ein freies Ende aufweisen, das mit einem dem Inneren des Mantels zugewandten Wulst endet, der dazu bestimmt ist, den Kolben im Inneren der Dosierkammer zu halten, und daß der Mantel an seinem freien, der Querwand (9) entgegengesetzten Ende eine Vielzahl von Ausschnitten aufweist, die eine Vielzahl von Eintrittsöffnungen für das Produkt bildet, wobei die Ausschnitte regelmäßig auf dem ganzen Umfang des Mantels (8) angeordnet sind.

15. Dosieraufsatz nach Anspruch 14, **dadurch gekennzeichnet, daß** die Querwand (9) mit dem Mantel (8) einstückig hergestellt ist.

16. Einheit zum Verpacken und dosierten Abgeben eines insbesondere kosmetischen Produkts, umfassend einen Behälter, der von einem Körper (62) gebildet ist, von dem ein Ende durch einen Boden (61) geschlossen ist, wobei das andere Ende einen Hals (6) bildet, von dem ein freier Rand (11) eine Öffnung begrenzt, wobei der Dosieraufsatz (1) auf diesem Hals fest montiert ist, und einen Dosieraufsatz nach einem der vorhergehenden Ansprüche.

17. Einheit nach Anspruch 16, **dadurch gekennzeichnet, daß** der Behälter (7) verformbare Seitenwände (60) aufweist, wobei der Druck des Produkts auf die erste Fläche (31) des Kolbens (21) durch einen auf diese Wände (60) ausgeübten Druck erhalten wird, wobei die Einheit ferner Mittel (27, 28, 100-110) aufweist, die einen Eintritt von Luft in den Behälter (7) gestatten, wenn der Druck auf die Wände (60) nachläßt, so daß die Produktvolumensverringerung im Inneren des Behälters (7) infolge der Abgabe einer Produktdosis ausgeglichen wird.

18. Einheit nach Anspruch 16 oder 17, **dadurch gekennzeichnet, daß** der Lufteintritt bei der Rückkehr des Kolbens (21) in die erste Stellung über den Durchgang (oder die Durchgänge) (27, 28, 100-110) zwischen dem Verschlußorgan (40) und dem Rand (19) der die Öffnung (20) abgrenzenden Wand (9) stattfindet.

19. Einheit nach Anspruch 18, **dadurch gekennzeichnet, daß** der Körper (62) elastisch verformbare Wände (60) aufweist, die geeignet sind, sich zu verformen, wenn darauf ein Druck ausgeübt wird, und in ihre Anfangsstellung zurückzukehren, wenn der Druck nachläßt.

20. Einheit nach einem der Ansprüche 16 bis 19, **dadurch gekennzeichnet, daß** sie eine Kappe aufweist, die geeignet ist, den Dosieraufsatz (1) abnehmbar zu bedecken.

21. Verwendung einer Einheit (120) nach einem der Ansprüche 16 bis 20 für das Verpacken und dosierte Abgeben eines kosmetischen Produkts, insbesondere eines Shampoos, eines Haarpflegemittels, eines Frisiergels, einer Pflegemilch oder -creme.

## Claims

1. Dosing nozzle (1) designed to be fitted onto a container (7) containing a product, the said nozzle comprising a dosing chamber (30) inside which a piston (21) is fitted so as to slide along an axis (X), a first face (31) of which piston is in permanent communication over its entire area with the container and a second face (25) of which piston, opposite the first, is in communication with the dosing chamber (30), the said piston (21) being fitted so as to be able, in response to pressure exerted by the product on the first face (31), to pass from a first position in which the dosing chamber (30) has a maximum volume to a second position, the said dosing chamber (30) comprising at least one inlet (12, 13) for the product, which is open when the piston (21) is in the first position and is closed when the piston (21) is in the second position, the said piston (21) being coupled to a closure member (40) which, when the piston passes from the first to the second position, emerges substantially through an opening (20) made in a wall (9) of the dosing chamber lying opposite the piston (21), and forms at least one passage (27, 28, 100-110) in order to allow expulsion of a dose of product, the said opening (20) being sealed off by the said closure member (40) when the piston (21) is in the first position, which nozzle is **characterized in that** the dosing chamber (30) has a minimum volume when the piston is in the second position, **in that** the passage (24, 28, 100-110) is formed between the said closure member (40) and the edge (19) of the wall defining the said opening (20), and **in that** the said closure member (40) includes a portion (29) which closes off the said opening (20) when the piston (21) is in the second position.

2. Dosing nozzle according to Claim 1, **characterized in that** elastic return means (24) are provided in order, when the product stops being pressed against the said first face (31) of the piston, to return the piston (21) to the said first position.

3. Dosing nozzle according to Claim 2, **characterized in that** the elastic return means (24) consist of a helical spring placed around the closure member, a first end of which spring is in abutment with the second face (25) of the piston and the second end of which spring is in abutment with a surface of the said wall (9) lying opposite the said second face (25).

4. Dosing nozzle according to Claim 3, **characterized in that** the second end of the spring (24) is in abutment with an element (154) defining at least one recessed portion (155) so as to allow the product to pass under the spring (24) when the piston (21) is in the said second position.

5. Dosing nozzle according to any one of Claims 1 to 4, **characterized in that** the profile of the piston (21) is such that, when the latter is in the second position, an annular region of the piston (150, 151) is in contact with the wall (9) all around the said spring (24).

6. Dosing nozzle according to any one of the preceding claims, **characterized in that** the inlet (or inlets) (12, 13) extend over an axial height such that, over a first part of the travel of the piston (21) between the said first and second positions, the inlet (or inlets) (12, 13) are open so as to allow pressurized product to enter the dosing chamber (30), in order to allow complete filling of the said dosing chamber, the said closure member (40) being designed so that the opening (20) in the dosing chamber (30) is closed off when the piston (21) moves over the said first part of its travel.

7. Dosing nozzle according to Claim 6, **characterized in that** the said closure member (40) comprises a first portion (29) adjacent to the piston and a second portion (23) opposite the first portion, the second portion (23) of the closure member having the same height as the axial height of the inlet (or inlets) (12, 13) and a cylindrical cross section capable of closing off the said opening (20) over the said first part of the travel of the piston (21).

8. Dosing nozzle according to Claim 7, **characterized in that** the passage (or passages) (27, 28, 100-110) between the said closure member (40) and the edge of the wall defining the said opening (20) are formed by one or more axial regions (27, 28, 100-110) of the closure member, the said regions (27, 28, 100-110) having a smaller cross section than the cross section of the said opening (20) and lying in an intermediate portion (26) located between the first portion (29) and the second portion (23).

9. Dosing nozzle according to Claim 8, **characterized in that** the passage (or passages) (27, 28, 100-110) have a radial depth of between 0.01 mm and 8 mm, and preferably between 0.2 mm and 2 mm.

10. Dosing nozzle according to Claim 8 or 9, **characterized in that** the intermediate portion (26) has a smaller cross section than the cross section of the opening (20) and lies along the axis of the said opening (20) so as to allow the product to pass all around the closure member (40), the said intermediate portion (26) being connected to the second portion (23) via a frustoconical region.

11. Dosing nozzle according to any one of Claims 1 to 10, **characterized in that** the dosing chamber (30) lies annularly all around the closure member (40), the said closure member (40) being centred on the axis X of the dosing chamber.

12. Dosing nozzle according to any one of the preceding claims, **characterized in that** it comprises means (4) which can allow it to be fixed onto a neck (6) formed by the said container (7), especially by snap-fastening or by screwing.

13. Dosing nozzle according to any one of the preceding claims, **characterized in that** it is obtained by moulding a thermoplastic, especially one chosen from polypropylenes or polyethylenes.

14. Dosing nozzle according to any one of the preceding claims, **characterized in that** the nozzle has a skirt (8) forming the outer wall of the dosing chamber (30), **in that** the skirt (8) has at its free end catching tabs (14, 15) capable of splaying elastically in order to allow the piston to pass when it is being fitted into the skirt (8), the catching tabs each having a free end that terminates in a bead facing the inside of the skirt, intended to keep the piston inside the dosing chamber, and **in that** the skirt has a plurality of cut-outs at its free end on the opposite side from the transverse wall (9), which forms a plurality of inlets for the product, the cut-outs being arranged in a regular manner over the entire circumference of the skirt (8).

15. Dosing nozzle according to Claim 14, **characterized in that** the transverse wall (9) is produced as one piece with the skirt (8).

16. Assembly for the packaging and dosed dispensing of a product, especially a cosmetic product, comprising a container formed from a body (62) which has one end closed by a bottom (61) and the other end forming a neck (6), a free edge (11) of which defines an opening, the dosing nozzle (1) being fixedly fitted onto the said neck, and a dosing nozzle as defined in any one of the preceding claims.

17. Assembly according to Claim 16, **characterized in that** the container (7) has deformable side walls (60), the product being made to press against the first surface (31) of the piston (21) by pressure being exerted on the said walls (60), the assembly furthermore including means (27, 28, 100-110) allowing intake of air into the container (7) when the pressure on the walls (60) ceases, so as to compensate for the reduction in volume of product inside the container (7) after a dose of product has been dispensed.

18. Assembly according to Claim 16 or 17, **characterized in that** the said air intake, while the piston (21) is returning to the first position, takes place via the passage (or passages) (27, 28, 100-110) between the said closure member (40) and the edge (19) of the wall (9) defining the said opening (20).

19. Assembly according to Claim 18, **characterized in that** the body (62) has elastically deformable walls (60) capable of deforming when pressure is exerted above, and of returning to their initial shape when the pressure ceases.

20. Assembly according to any one of Claims 16 to 19, **characterized in that** it includes a cap capable of removably covering the said dosing nozzle (1).

21. Use of an assembly (120) according to any one of Claims 16 to 20 for the packaging and dosed dispensing of a cosmetic product, especially a shampoo, a conditioner, a hair gel, a milk or a beauty-care cream.
